# DEMANDE DE BREVET EUROPEEN

(11) **EP 0 936 827 A1**
(43) Date de publication de la demande: **18.08.1999**
(21) Numéro de dépôt: 99200350.9
(22) Date de dépôt: 08.02.1999
(51) Int. Cl.: H04Q 7/32

(54) **Système téléphonique formé d'une station de base et d'au moins un dispositif d'abonné, comportant un dispositif de rappel, procédé pour établir des rappels**

(30) Priorité: 17.02.1998 FR 9801907
(71) Demandeur: Koninklijke Philips Electronics N.V., 5621 BA Eindhoven (NL)
(72) Inventeur: Carrera, Albert, 75008 Paris (FR)
(74) Mandataire: Chaffraix, Jean

(57) **Abrégé**

Ce système téléphonique est formé d'une station de base (1) et d'une pluralité de dispositifs d'abonné (HS1, HS2,...). Ce système comporte un dispositif de rappel pour fournir des signaux de rappel en agissant sur un dispositif sonore, par exemple en faisant retentir une sonorité par l'écouteur/haut-parleur (44) pour les utilisateurs. On propose d'associer à ces signaux de rappel un message qui peut être sonore ou visuel.

Application aux téléphones répondant à la norme DECT

## Description

L'invention concerne un système téléphonique formé d'une station de base et d'au moins un dispositif d'abonné destiné à au moins un utilisateur, système comportant un dispositif de rappel pour fournir des signaux de rappel pour au moins un desdits utilisateurs.

L'invention concerne un procédé pour établir des rappels et aussi une station convenant à un tel système.

L'invention concerne aussi une station de base convenant à un tel système.

L'invention concerne en outre un dispositif d'abonné convenant également à un tel système.

L'invention trouve des applications importantes dans tous les appareils téléphoniques dit : "sans fils". Par exemple, des appareils téléphoniques satisfaisant à la norme DECT, notamment.

La demande de brevet japonais n°5-276230/4-101940 décrit un tel système. Ce système comporte un dispositif de rappel qui fournit un signal de rappel à l'utilisateur. Cette fonction de rappel est plutôt fruste et ne permet pas à l'utilisateur de connaître la raison de ce signal de rappel. Cet inconvénient devient rédhibitoire lorsque cet utilisateur a prévu des rappels pour une série d'événements, par exemple appeler une première personne au téléphone et se rendre à un rendez vous etc... Il peut en découler que cet utilisateur se méprenne sur un signal de rappel et intervertisse deux actions qu'il avait programmées.

Pour remédier totalement à ce genre d'inconvénient, un tel appareil cité dans le préambule est remarquable en ce qu'il est prévu un moyen de perception de message pouvant être rattaché au signal de rappel.

Selon des caractéristiques de l'invention, ces messages peuvent être vocaux et/ou visuels.

La description suivante faite en regard des dessins ci-annexés, le tout donné à titre d'exemple non limitatif, fera bien comprendre comment l'invention peut être réalisée.

La figure 1 montre un système téléphonique conforme à l'invention.

La figure 2 montre un dispositif d'abonné montrant les élément participant à la mise en oeuvre de l'invention.

La figure 3 montre un premier organigramme du fonctionnement du système téléphonique de la figure 1, explicitant la mise en relation du dispositif d'abonné avec la station de base.

La figure 4 montre un deuxième organigramme, explicitant le processus d'établissement du rappel.

La figure 5 montre comment l'heure de rappel est établie.

La figure 6 montre un autre organigramme explicitant l'enregistrement affecté au rappel.

La figure 7 montre la structure d'un tableau pour l'établissement desdits rappels.

La figure 8 montre encore un organigramme explicitant le processus de rappel.

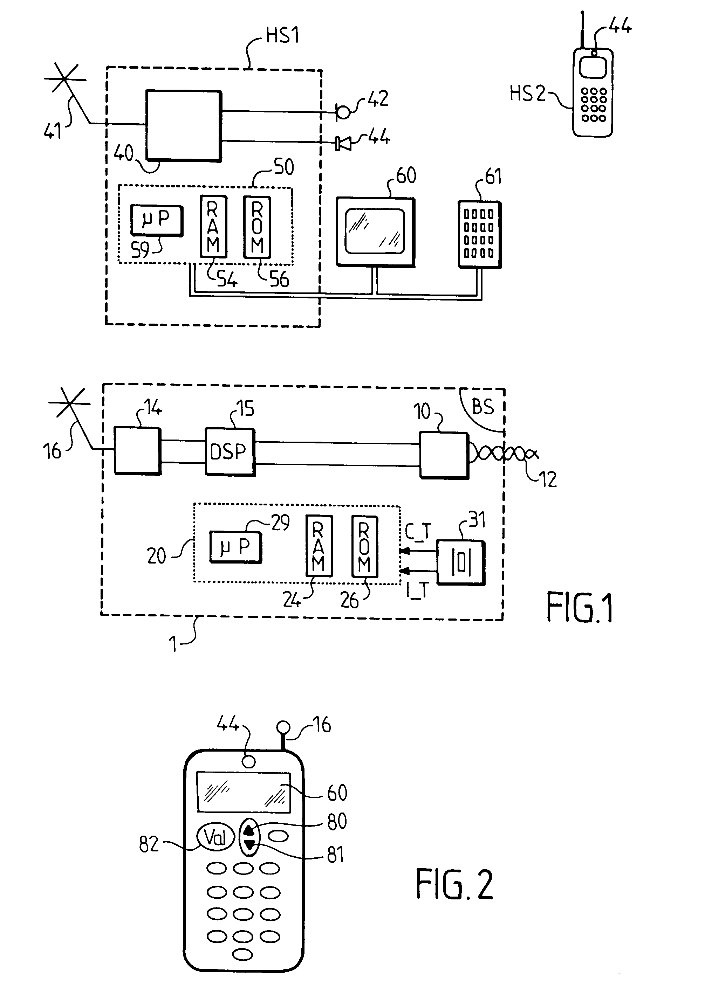

A la figure 1, le système qui est représenté est un système répondant aux normes DECT. La référence 1 montre la station de base BS à laquelle peut être rattachée, par voie radioélectrique, une pluralité de dispositifs de combinés HS1, HS2, ... Cette station de base 1 comporte, entre autres, un circuit de ligne 10 qui lui permet d'être raccordée au réseau commuté via une ligne téléphonique 12 et un circuit radioélectrique 14 qui autorise le dialogue avec les différents combinés HS1, HS2, ..., en émettant et en recevant des ondes par l'intermédiaire d'une antenne 16. Pour traiter toutes les informations de nature analogique qui transitent à l'intérieur du circuit de base, il est prévu un organe de traitement de signal 15 formé autour d'un processeur de signal DSP qui traite notamment les signaux vocaux pour les transformer en signaux numériques.

Tous les éléments de ce circuit de base 1 sont gérés par un ensemble à microprocesseur 20. Cet organe est composé, notamment, de la façon usuelle, d'une mémoire vive 24 (qui peut se décomposer en mémoire de travail et aussi en mémoire pour le stockage de messages sonores), d'une mémoire morte 26 contenant les instructions de fonctionnement de l'appareil et d'un processeur de gestion 29.

Une horloge 31 fournit en direction de cet ensemble 20 un premier signal C_T donnant l'heure et le jour et aussi un deuxième signal I_T rendu actif à chaque minute pour déclencher des actions qui seront décrites plus loin.

Le dispositif de combiné HS1, seul montré en détail (le dispositif HS2 pouvant être de structure identique) comporte un ensemble de communication 40 muni d'une antenne 41 qui lui permet de communiquer avec la station de base BS et de là, avec les autres dispositifs de combinés HS2, .... Cet ensemble traite les informations en provenance du microphone 42 et fournit aussi les signaux pour un haut-parleur 44. Il est prévu aussi un organe de gestion 50 composé, tout comme l'organe de gestion 20, d'une mémoire vive 54, d'une mémoire morte 56 contenant les instructions de fonctionnement de l'appareil et d'un processeur de gestion 59. La mémoire 56 peut être du type EEPROM ou du type flash. Le dispositif HS1 comporte aussi un écran 60 sur lequel différentes informations sont affichées et un clavier 61. Ces combinés sont des mobiles et de ce fait sont alimentés par un accumulateur, non représenté sur la figure 1. Sur l'écran 60 peuvent apparaître des menus dont l'utilisateur déclenche l'apparition au moyen des touches du clavier 61.

La figure 2 montre la façade d'un dispositif de combiné. Sur cette figure, sont portées deux références 80 et 81 pour repérer des touches sur lesquelles sont représentées respectivement, d'une part, une flèche dirigée vers le haut et d'autre part une flèche dirigée vers le bas. Ces touches 80 et 81 permettent de faire évoluer les rubriques de menu qui apparaissent sur l'écran 60. Les rubriques des menus peuvent être validées par un appui sur une touche de validation 82.

Le système de la figure 1 est pourvu d'un système de rappel pour déclencher, à une certaine heure, au niveau de chaque dispositif de combiné qui en a fait la demande, une tonalité de rappel restituée par le haut-parleur 44.

Cependant, il s'avère que ce signal sonore de rappel est insuffisant pour certains usagers, comme cela a été dit ci-dessus.

Conformément à l'invention, un message de rappel, notamment pour signaler qu'une action doit être engagée par l'utilisateur, par exemple, qu'il faut aller à un certain rendez-vous, peut être affecté à chaque rappel prévu par l'utilisateur.

La mise en oeuvre de l'invention implique plusieurs processus, que l'on va détailler, et qui se déclenchent à partir du combiné. L'usager en activant ces différents processus permet l'exécution de différentes opérations.

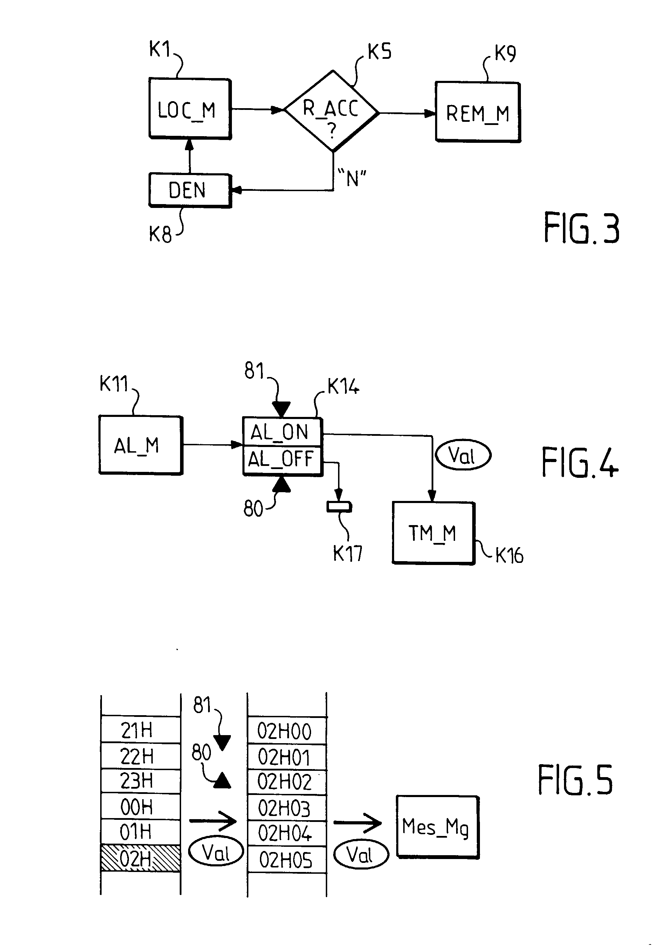

On se reporte, tout d'abord, à la figure 3 qui est un premier organigramme de fonctionnement du système de l'invention. La case K1 indique l'accès au menu local LOC_M du dispositif de combiné. A partir d'une rubrique de ce menu, on demande d'établir une liaison, dite propriétaire, entre le dispositif de combiné et la station de base, ceci est indiqué à la case K5. Cette liaison rentre évidemment dans le cadre des normes qui régissent les systèmes DECT (voir ETS 300 175-5, § 7.7.4.5 notamment). Mais cette liaison peut ne pas être toujours établie et l'on retourne à la case K1. Ceci est signalé à l'usager par un message DEN (case K8) et l'on retourne au menu local (case K1). Cette liaison, établie, permet d'accéder à un autre menu REM_M indiqué par la case K9 provenant de la station de base BS. De ce menu, on peut sélectionner le menu "rappel" AL_M, indiqué à la case K11 de la figure 4. Sur ce menu en agissant sur les touches 80 et 81 on peut mettre le rappel en oeuvre ou le désactiver, case K14. Si le rappel est mis en oeuvre alors on accède au menu d'établissement de l'heure de rappel TM_M indiqué à la case K16. Si on désactive le rappel, alors on sort du menu case K17.

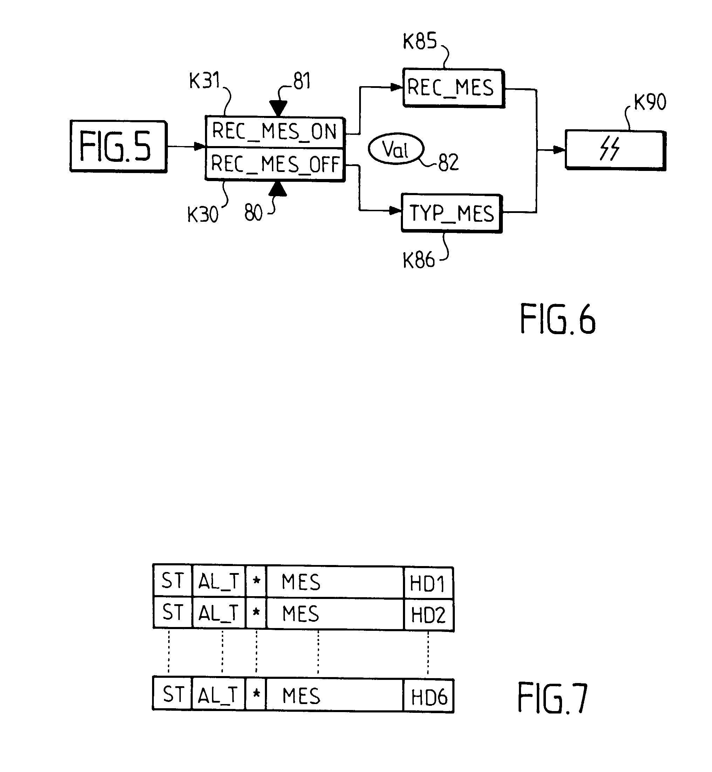

Le menu REM_M est explicité à la figure 5. Par appui des touches 80 et 81 on fait défiler les heures de rappel qui font déclencher le signal de rappel. Leur sélection est validée par l'appui de la touche 82. Sur la figure 5, l'heure validée, représentée en grisé est : 02H. Puis on passe au réglage des minutes de la même manière. Après validation de ces dernières, on passe à un menu de déclaration de message Mes_Mg explicité à la figure 6.

Ce menu demande si l'on veut enregistrer un message vocal ou taper ce message, ce qui est montré aux cases K30 et K31. Selon l'option choisie, on va aux cases K85 ou K86 intitulées respectivement REC_MES et TYP_MES. L'utilisateur finit par valider l'une de ces deux options par appui de la touche de validation 82. S'il veut enregistrer un message il est mis en relation avec le système d'enregistrement des messages qui se comporte comme un répondeur téléphonique. Ceci est indiqué à la case K85 où, s'il veut taper son message, il a accès à un éditeur de sorte que le message puisse être tapé. Lorsque l'une de ces opérations indiquées aux cases K85 et K86 est terminée, la connexion dite propriétaire entre le dispositif de combiné et la station de base est coupée, case K90.

A la figure 7, on a explicité la manière dont sont rangées les informations dans la mémoire 24. Ces informations sont organisées en tableau dont chaque ligne concerne les différents dispositifs de combiné dont le nombre dans le cadre de l'exemple décrit est de six. Chacune de ces six lignes comprend une première rubrique ST qui, mise à l'état « ON » indique que le dispositif de combiné est à l'état de rappel et qu'il souhaite donc d'être rappelé. Une deuxième rubrique contient l'heure à laquelle il faut effectuer ce rappel, une troisième rubrique représentée par une astérisque * donne la nature du message que l'on veut fournir à l'abonné rappelé : soit un message parlé, soit un message visualisé. Si l'on ne veut aucun message et que l'on souhaite donc un simple signal de rappel il suffit donc de faire un message vide. Une quatrième rubrique concerne ce message et la cinquième rubrique donne la référence du dispositif de combiné concerné.

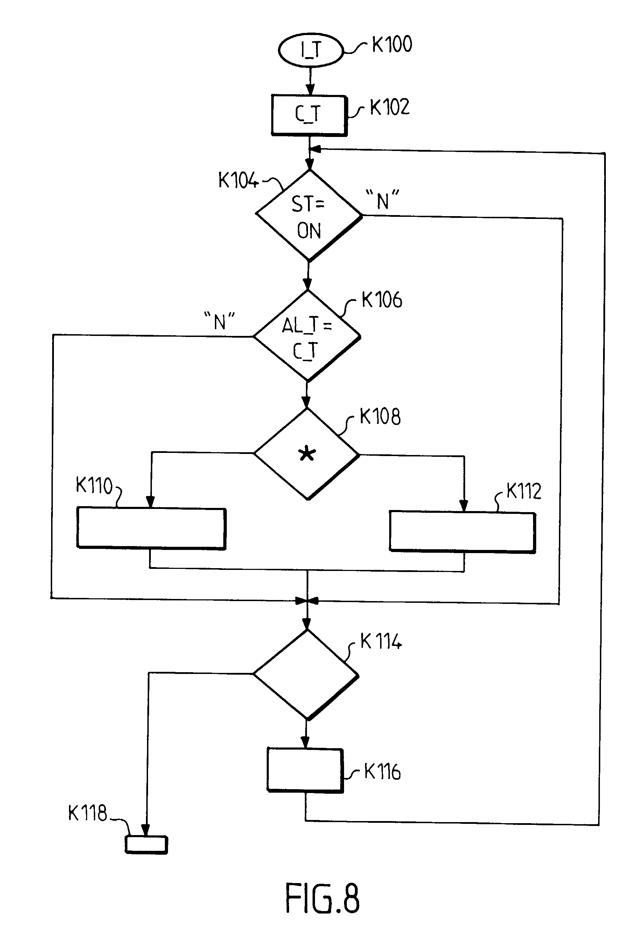

La figure 8 montre un organigramme qui aide à expliquer le fonctionnement du système conforme à l'invention pour déclencher un signal de rappel vers le ou les dispositifs de combiné.

Le fonctionnement qui va être explicité est déclenché par le signal I_T case K100. La première opération, case K102, consiste à prélever l'heure dite heure courante C_T à partir de l'horloge 31. Puis on va examiner le tableau explicité à la figure 7. On examine tout d'abord les informations relatives au premier dispositif de combiné HD1. Tout d'abord la rubrique ST, case K104. Si un signal de rappel a été demandé, alors examine la coïncidence de l'heure de rappel demandée AL_T et l'heure courante C_T, case K106. S'il y a coïncidence alors on va tester à la case K108 la nature du message à émettre. Si c'est un message sonore, on doit passer par l'intermédiaire du dispositif répondeur cette procédure, qui est indiquée à la case K110. Si c'est un message visuel, on doit passer par l'intermédiaire de l'écran 60,.la procédure se déroulant à la case K112. Ces procédures impliquent l'établissement de liens propriétaires déjà mentionnés ci-dessus.

Puis, on examine à la case K114 si les informations concernant tous les dispositifs de combinés ont bien été analysées sinon on se prépare à examiner le suivant, case K116, et on retourne à la case K104. Si tous les dispositifs de combiné ont été examinés, alors le processus est terminé, case K118.

Si les tests indiqués aux cases K104 et K106 se révèlent négatifs, on passe à la case K114.

## Revendications

1. Système téléphonique formé d'une station de base et d'au moins un dispositif d'abonné destiné à au moins un utilisateur, système comportant un dispositif de rappel pour fournir des signaux de rappel pour au moins un desdits utilisateurs, caractérisé en ce qu'un message peut être affecté à chaque signal de rappel.

2. Système téléphonique selon la revendication 1 caractérisé en ce qu'il satisfait à la norme DECT.

3. Système téléphonique selon l'une des revendications 1 ou 2 caractérisé en ce que les messages sont visuels.

4. Système téléphonique selon l'une des revendications 1 ou 2 caractérisé en ce que les messages sont sonores.

5. Système selon l'une des revendications 1 ou 2 caractérisé en ce que lesdits messages sont vides.

6. Procédé mis en oeuvre dans un système selon l'une des revendications 1 à 5 caractérisé en ce que pour enregistrer une demande de rappel, il comporte les étapes suivantes :
- établissement d'une liaison entre la station satellite et la station de base
- choix d'une heure de rappel pour constituer une première information de rappel,
- choix entre un message parlé ou écrit pour constituer une deuxième information de rappel,
- enregistrement du message,
- mise dans une table adressée par l'identification des dispositifs d'abonné desdites informations de rappel.

7. Procédé selon la revendication 6 caractérisé en ce que pour effectuer un rappel, il comporte les étapes suivantes :
- lecture de ladite table en effectuant cette lecture successivement pour chacun desdits dispositifs d'abonné,
- analyse desdites informations de rappel,
- établissement d'une liaison vers un dispositif d'abonné concerné, déterminé par ladite analyse,
- émission d'un signal de rappel,
- fourniture du message.

8. Dispositif d'abonné convenant à un tel système selon l'une des revendications 1 à 5 comprenant des moyens pour inscrire dans un tableau lesdites informations de rappel.

9. Station de base convenant à un tel système selon les revendications 1 et 2 comprenant des moyens pour contenir ledit tableau et le gérer et des moyens pour déclencher vers les dispositifs d'abonné les rappels désirés.
